# EUROPÄISCHE PATENTSCHRIFT

(11) **EP 0 810 058 B1**
(45) Veröffentlichungstag und Bekanntmachung des Hinweises auf die Patenterteilung: **15.11.2000**
(21) Anmeldenummer: 97108603.8
(22) Anmeldetag: 28.05.1997
(51) Int. Cl.: B23P 13/02

(54) **Verfahren zur vollautomatischen Herstellung eines zylindrischen Werkstückes aus wenigstens zwei Materialien**
Process for fully automated making of a cylindrical workpiece made of at least two distinct materials
Procédé de fabrication entièrement automatique d'une pièce cylindrique fait d'au moins deux matériaux distincts

(30) Priorität: 30.05.1996 DE 19621764
(43) Veröffentlichungstag der Anmeldung: 03.12.1997
(73) Patentinhaber: Traub Drehmaschinen GmbH, 73262 Reichenbach (DE)
(72) Erfinder: Folkerts, Hans-Dieter, 73072 Donzdorf (DE); Osswald, Ernst, 73262 Reichenbach (DE); Heinrich, Andreas, 73547 LORCH-WALDHAUSEN (DE); Klauss, Walter, 73099 Adelberg (DE); Zimmer, Herbert, 73061 Ebersbach (DE)
(74) Vertreter: Schmidt, Steffen J., Dipl.-Ing.

(56) Entgegenhaltungen:
- DE-A- 4 302 308
- DE-A- 4 331 846
- US-A- 4 386 440
- US-A- 5 175 914

## Beschreibung

Die vorliegende Erfindung betrifft ein Verfahren zur vollautomatischen Herstellung eines zylindrischen Werkstückes aus wenigstens zwei Materialien.

Der Erfindung liegt das Problem zugrunde, ein zylindrisches Werkstück aus wenigstens zwei Materialien herzustellen. Dabei besteht ein erstes zylindrisches Teilstück aus einem ersten Werkstoff und ein dieses zylindrische Teilstück zumindest teilweise umgebendes zweites Teilstück aus einem zweiten Werkstoff. Das zweite Teilstück ist im fertig montierten Zustand des Werkstückes zwischen zwei Bünden aufgenommen. Für eine wirtschaftliche Fertigung ist es wünschenswert, die Herstellung des Werkstückes in einem Arbeitsgang durchzuführen. Dazu eignet sich in besonderer Weise eine Dreh-/Fräsmaschine mit NC-Steuerung.

Aus dem Stand der Technik ist es bekannt, das zweite Teilstück auf das erste Teilstück in der Weise aufzubringen, daß das zweite Teilstück als flüssiges Material aufgespritzt, aufgeschäumt, aufgegossen oder dergl. wird, so daß es sich vollständig zwischen den beiden Bünden erstreckt. Allerdings ist es nicht möglich, die maßgenaue Herstellung des ersten Teilstückes in einer NC-Maschine durchzuführen und im gleichen Arbeitsgang das Material des zweiten Teilstückes zwischen den beiden Bünden aufzubringen. Außerdem können Passungsanforderungen zwischen den beiden Teilstükken nicht realisiert werden.

Aus der DE 42 14 354 A1 ist ein Verfahren zum Herstellen einer Schraubverbindung bekannt, bei der zum Erreichen von gleichbleibenden Schraubenvorspannkräften der Fügepunkt einen den Funktionszusammenhang zwischen aufzuwendendem Drehmoment und Drehwinkel beschreibenden Kurve festgestellt wird, wobei ausgehend von dem Fügepunkt der Schraubvorgang nach Maßgabe eines vorgebbaren Drehwinkelwertes oder Drehmomentwertes bis zum Erreichen eines Abschaltwertes fortgesetzt wird. Der Fügepunkt wird aus dem Verlauf einer Kurve ermittelt.

Aus der DE 43 31 846 A1 ist ein Verfahren zum Anziehen einer Schraubverbindung bekannt, bei der in einem ersten Verfahrensschritt ein Anziehen bis zur Auflage der Bestandteile der Schraubverbindung aufeinander und in einem zweiten Verfahrensschritt eine Verspannung um einen vorgegebenen Drehwinkel vorgesehen wird.

Die manuelle Herstellung eines zylindrischen Werkstückes aus wenigstens zwei Materialien erfolgt üblicherweise derart, daß auf einer ersten Maschine das erste zylinderförmige Teilstück hergestellt wird, wobei es auf einer Seite einen Bund aufweist und an der Stelle, an der an dem fertigen Werkstück ein zweiter Bund angeordnet ist, ein Gewinde ausgeformt wird. Auf dieses Gewinde wird später der zweite Bund als Mutter aufgeschraubt. Dann wird das rohrförmige zweite Teilstück aus einem zweiten Material angefertigt. Anschließend werden die beiden Teilstücke manuell zusammengefügt, auf die Gewindegänge des Gewindes wird Sicherungskleber aufgetragen und anschließend der zweite Bund als Mutter aufgeschraubt und mit definiertem Drehmoment angezogen.

Angesichts der hohen Kosten einer manuellen Fertigung besteht die Aufgabe der Erfindung darin, ein zylindrisches Werkstück aus wenigstens zwei Materialien vollautomatisch herzustellen.

US 5,175,914 A beschreibt ein Verfahren zur vollautomatischen Herstellung eines zylindrischen Werkstückes in einem Dreh/Fräszentrum und zugeordnetem Handhabungssystem, wobei ein Teilstück und ein Gegenstück in gegenüberliegenden Spindeln eingespannt, bearbeitet, mit einem Außengewinde bzw. einem Innengewinde versehen werden, und wobei das Gegenstück an das erste Teilstück mittels der Spindeln gefügt wird und das Werkstück abgestochen und aus dem Dreh-/Fräszentrum entnommen wird.

Aus Martuszewski, H.: Handbuch Vorrichtungen, Konstruktion und Einsatz, Vieweg-Verlag 1986, Braunschweig/Wiesbaden, S.338 -340, S.362, ist es bekannt, daß Werkstücke in automatisierten Fertigungssystemen zur Bearbeitung automatisch gespannt und auf verschiedenartige Werkstücke automatisch montiert werden können.

Zur Lösung der Aufgabe wird erfindungsgemäß ein Verfahren gemäß anspruch 1 vorgeschlagen.

Vorzugsweise wird das erfindungsgemäße Verfahren auf einem Dreh-/Fräszentrum mit folgender Mindestausstattung ausgeführt: Eine Haupt- und eine Gegenspindel sind (in Z-Achse) einander zugewandt und jeweils mit einer Werkstückspanneinrichtung versehen. Des weiteren sind zwei Kreuzschlitten vorgesehen, die jeweils einen Werkzeugträger aufweisen und wahlweise an der Haupt- oder an der Gegenspindel Bearbeitungsschritte ausführen können. Schließlich ist ein programmierbares Handhabungssystem mit Teilespeicherung vorgesehen.

Das zweite Teilstück wird aus dem zweiten Material vollständig hergestellt und mit dem programmierbaren Handhabungssystem in einem Teilespeicher abgelegt. Alternativ dazu kann das zweite Teilstück auch aus einer anderen Quelle in den Teilespeicher des Handhabungssystems gebracht werden. Anschließend wird das erste Teilstück aus dem ersten Material hergestellt. Dazu wird der Rohling mit dem Handhabungssystem in die Werkstückspanneinrichtung der Hauptspindel eingebracht. Dann wird der Rohling bearbeitet. Dabei wird zumindest ein Anschlag für das zweite Teilstück hergestellt und in räumlichen Abstand dazu ein erster Teil einer Fügeverbindung (z.B. ein Außengewinde). Je nach Ausstattung der CNC-Maschine wird gleichzeitig oder zeitlich versetzt zu der Bearbeitung des ersten Teilstücks ein Gegenstück in der Werkstückspanneinrichtung der Gegenspindel angefertigt. Dabei wird an dem Gegenstück ein zweiter Teil der Fügeverbindung (z.B. ein Innengewinde) an dem Gegenstück ausgeformt. Durch winkelsynchrones Antreiben der Gegenspindel und der Hauptspindel beim und nach dem Herstellen der beiden Teile der Fügeverbindung (z. B. Innen- und Außengewinde) kann sichergestellt werden, daß auch die Fügeverbindungen eine definierte Winkelstellung zueinander haben. Wenn es sich bei der Fügeverbindung um eine Schraubverbindung mit Innen- und Außengewinde handelt, können so die Gewindeanfänge des Innengewindes bzw. des Außengewindes in definierter Winkelstellung zueinander stehen, so daß es möglich ist, das erste Teilstück mit dem Gegenstück zu verschrauben.

Mit dem Handhabungssystem wird das zweite Teilstück zugeführt und über das erste Teilstück geschoben. Anschließend werden die beiden Gewindeanfänge zusammengebracht und verschraubt, nachdem auf die Gewindegänge ein Sicherungskleber aufgebracht worden ist. Vorteilhafte Weiterbildungen sind Gegenstand der Unteransprüche.

In der Zeichnung ist das erfindungsgemäße Verfahren sowie das durch das erfindungsgemäße Verfahren herstellbare zylindrische Werkstück schematisch veranschaulicht. Aus der nachfolgenden Figurenbeschreibung werden weitere Einzelheiten, Vorteile und Alternativen deutlich.

Es zeigen:
- Fig. 1a bis 1f: den Fertigungs- und Montageablauf,
- Fig. 2: ein Flußdiagramm des erfindungsgemäßen Fügevorgangs, und
- Fig. 3: den erfindungsgemäßen Fügevorgang gemäß dem Flußdiagramm in Fig. 2.

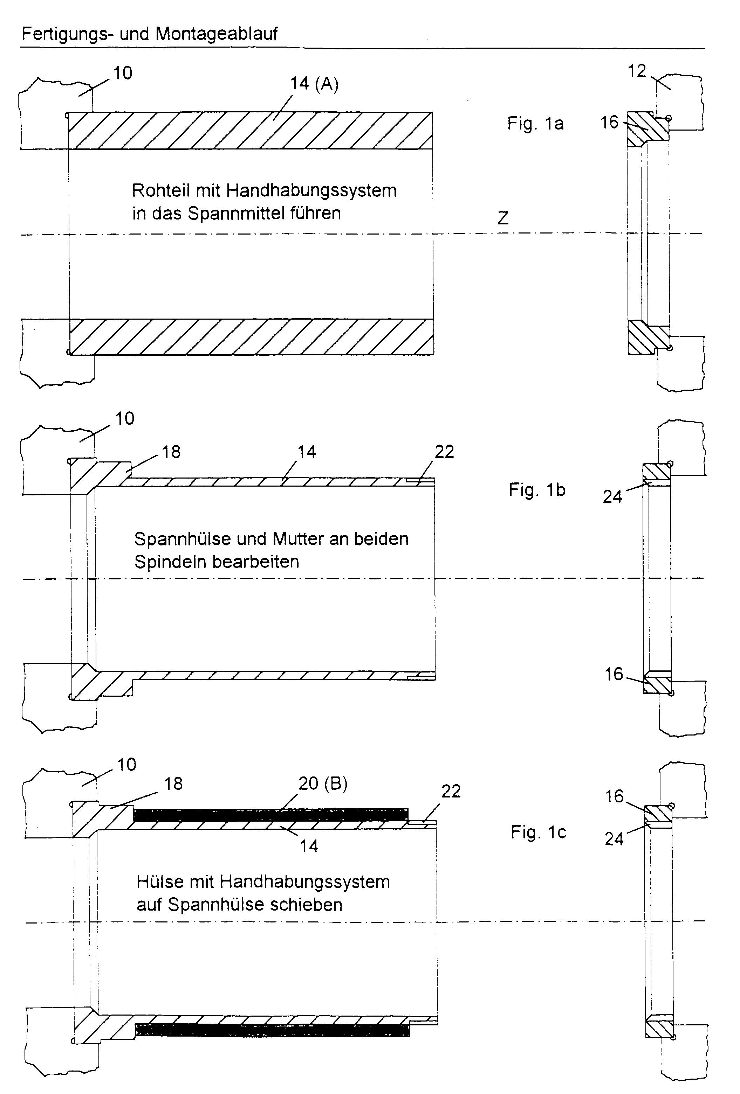

In einer CNC-gesteuerter Dreh-/Fräsmaschine mit einer Hauptspindel und einer Gegenspindel, die jeweils eine Werkstückspanneinrichtung 10 bzw. 12 aufweisen und in der Z-Achse zueinander verfahrbar sind, wird mittels eines (nicht gezeigten) Handhabungssystem ein Rohteil eingebracht und in der Werkstückspanneinrichtung 10 der Hauptspindel eingespannt. Dieses Rohteil bildet ein erstes zylindrisches Teilstück 14 aus einem ersten Material A. In der Werkstückspanneinrichtung 12 der Gegenspindel wird mit Hilfe des (nicht gezeigten) Handhabungssystems ein Rohteil eingebracht, das ein Gegenstück 16 zu dem ersten zylindrischen Teilstück 14 ist (Fig. 1a).

Die CNC-Maschine hat des weiteren zwei (nicht veranschaulichte) Kreuzschlitten mit je einem Werkzeugträger. In dem jeweiligen Werkzeugträger befindet sich das zur Bearbeitung des ersten Teilstückes 14 und des Gegenstückes 16 erforderliche (nicht gezeigte) Werkzeug um das erste zylindrische Teilstück 14 bzw. das Gegenstück 16 an der Haupt- bzw. der Gegenspindel zu bearbeiten. Dabei wird das erste zylindrische Teilstück 14 so bearbeitet, daß an seinem der Werkstückspanneinrichtung 10 zugewandten Ende ein Ringbund entsteht, der einen Anschlag 18 für ein zweites Teilstück 20 bildet. Des weiteren wird an dem der Werkstückspanneinrichtung 10 abliegenden Ende des ersten zylindrischen Teilstücks 14 ein Außengewinde 22 als erster Teil einer Fügeverbindung geschnitten.

Das Gegenstück 16 wird zumindest in der Weise bearbeitet, daß ein Innengewinde 24 als zweiter Teil der Fügeverbindung mit dem ersten Teilstück 14 verbindbar ist.

Das Außengewinde 22 bzw. das Innengewinde 24 kann auch durch Strehlen hergestellt werden.

Das Anfertigen des Innen- bzw. des Außengewindes 22, 24 erfolgt in der Weise, daß die Haupt- und die Gegenspindel winkelsynchron (C-Achse) angetrieben werden. Damit wird sichergestellt, daß das erste zylindrische Teilstück 14 und das Gegenstück 16 stets eine definierte Winkelstellung zueinander aufweisen. Dies ist in Fig. 1b veranschaulicht.

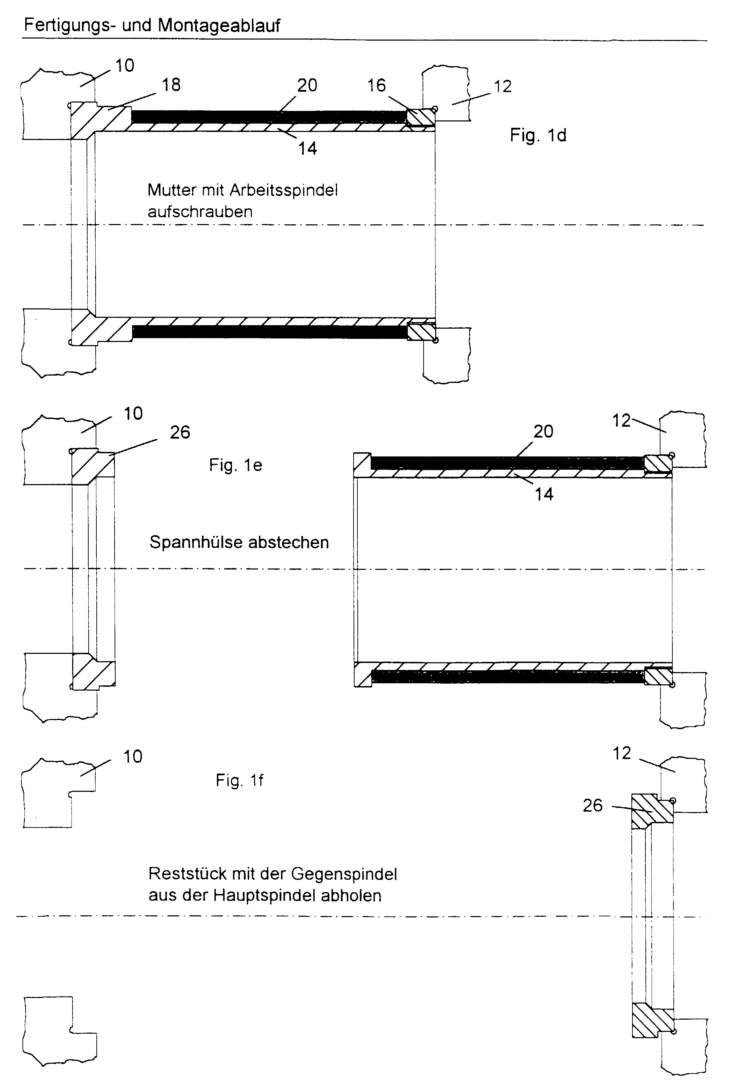

Anschließend wird das zweite Teilstück 20 mittels des (nicht gezeigten) Handhabungssystems über das erste zylindrische Teilstück 14 geschoben. Das zweite Teilstück wurde entweder vorher gefertigt und in einem Teilespeicher des Handhabungssystems abgelegt. Alternativ dazu kann das zweite Teilstück 20 auch auf einer anderen Maschine so bearbeitet werden, daß es auf das erste zylindrische Teilstück 14 aufbringbar ist. Insbesondere ist dabei die axiale Erstrekkung des zweiten Teilstücks 20 so gewählt, daß dieses bei Anlage an dem Bund 18 das Außengewinde 22 an dem ersten Teilstück 14 nur teilweise überdeckt, so daß beim Aufschrauben des Gegenstücks 16 das zweite Teilstück 20 gegen den Anschlag 18 gepreßt wird. Damit ist das zweite Teilstück 20 zwischen dem Anschlag 18 und dem Gegenstück 16 fest eingespannt (Fig. 1c, 1d).

Anschließend wird das erste zylindrische Teilstück 14 mit einem Werkzeug eines Kreuzschlittens abgestochen (Fig. 1e). Dann verfährt die Gegenspindel das Werkstück soweit entlang der Z-Achse, daß es in die Reichweite des Handhabungssystems kommt (Fig. 1e). Sobald das Handhabungssystem das fertige Werkstück ergriffen hat, gibt die Werkstückspanneinrichtung der Gegenspindel das Werkstück frei und das Handhabungssystem entfernt das fertige Werkstück aus dem Arbeitsbereich.

Schließlich wird noch das Reststück 26 mit der Werkstückspanneinrichtung 12 der Gegenspindel aus der Werkstückspanneinrichtung 10 der Hauptspindel abgeholt um ebenfalls mit dem Handhabungssystem aus dem Arbeitsbereich befördert zu werden (Fig. 1f).

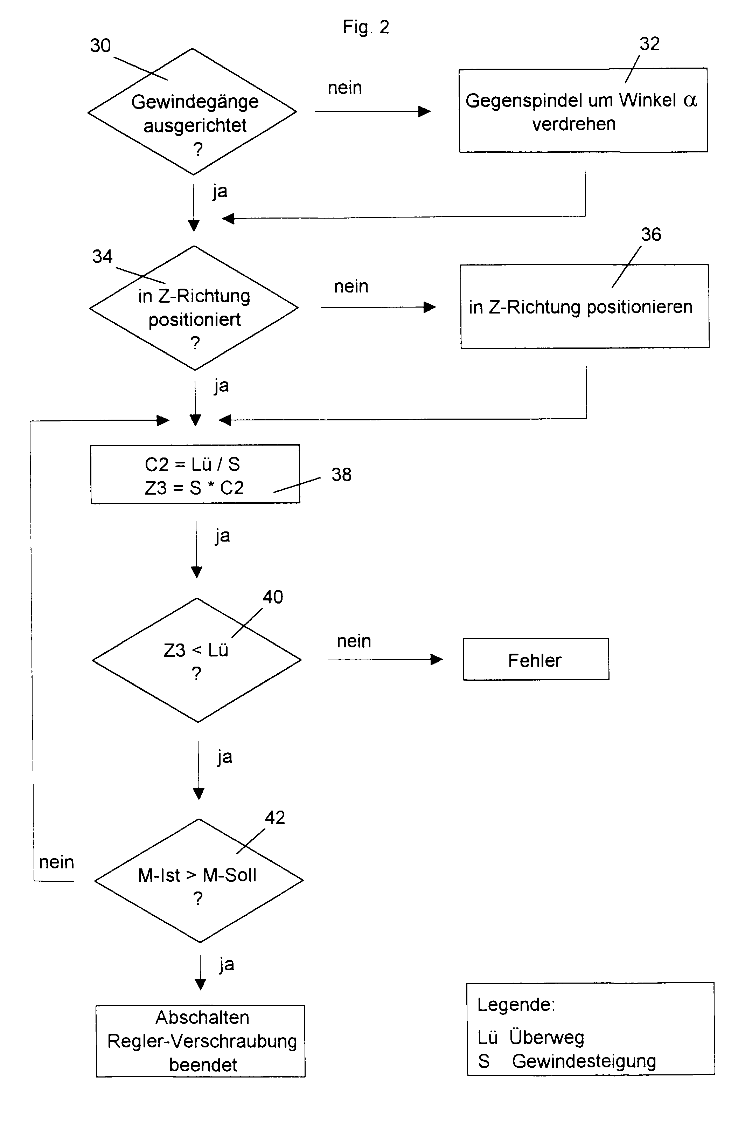

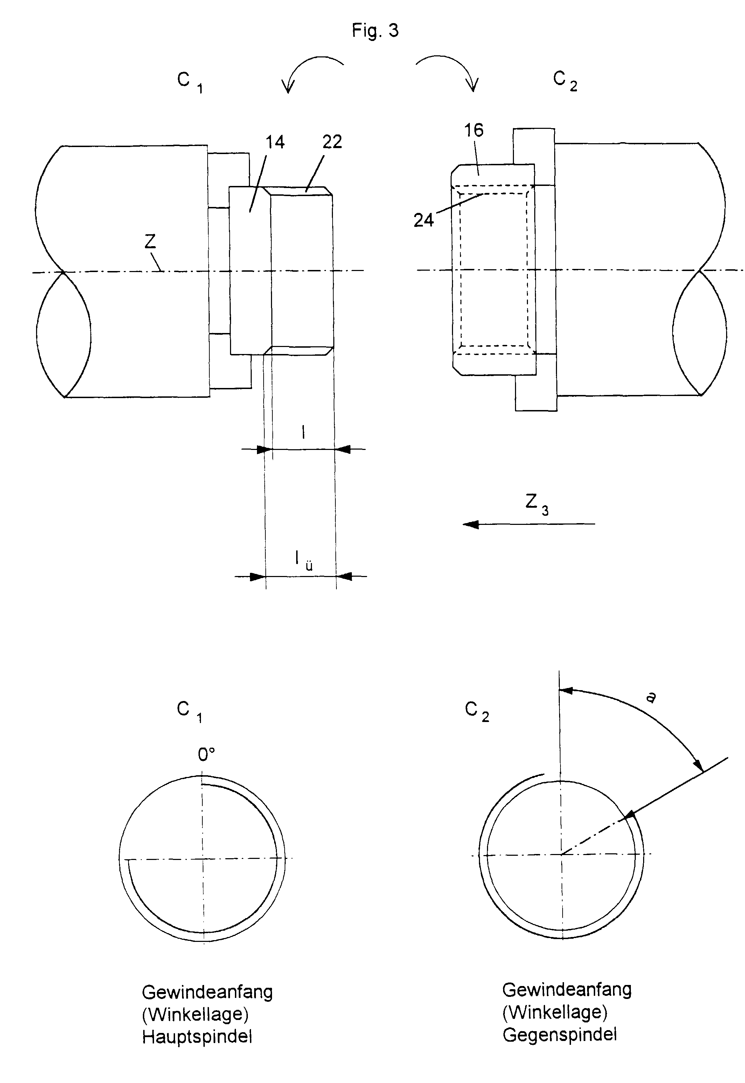

Unter Bezugnahme auf Fig. 2 und 3 wird der Fügevorgang des ersten zylindrischen Teilstücks 14 mit dem Gegenstück 16 im Detail erläutert.

Zunächst werden die Gewindegänge des Außengewindes 22 bzw. des Innengewindes 24 so zueinander verdreht, daß die jeweiligen Gewindeanfänge einen vorherrschenden Winkel α zueinander aufweisen. Dazu wird überprüft ob die Gewindegänge zueinander ausgerichtet sind (30). Falls die Ausrichtung der Gewindegänge zueinander nicht korrekt ist wird die Gegenspindel C2 soweit verdreht, daß der Gewindeanfang des Innengewindes 24 am Gegenstück 16 einen Winkel α gegenüber dem Gewindeanfang an dem Außengewinde 22 des ersten zylindrischen Teilstücks 14 einnimmt (32). Anschließend wird die Positionierung des ersten zylindrischen Teilstücks 14 gegenüber dem Gegenstück 16 in Z-Richtung überprüft (34). Wenn das Gegenstück 16 sich nicht in Anlage an dem freien Ende des ersten zylindrischen Teilstücks 14 befindet (Ausgangsstellung der Verschraubung), wird die Gegenspindel in Z-Richtung verfahren (36).

Beim Verschrauben besteht ein Funktionszusammenhang zwischen dem Drehwinkel (C-Achse) und dem Vorschub der Z-Bewegung der Gegenspindel entsprechend der Gewindesteigung (S). Dabei ergibt sich aus der Länge des freien Gewindes (soweit dieses nicht durch das zweite Teilstück 20 überdeckt ist) ein bestimmter Drehwinkel, bis das Gegenstück an dem freien Ende des zweiten Teilstücks 20 zur Anlage kommt. Ein Weiterdrehen des Gegenstücks 16 führt zum Festdrehen und Verspannen des zweiten Teilstücks 20 durch das Gegenstück 16 (38, 40). Dieses Festdrehen soll mit vorgebbarem Drehmoment (M_{Soll}) erfolgen (42).

In dem NC-Programm ist dazu ein größerer Drehwinkel vorgegeben, als aufgrund der geometrischen Gegebenheiten (freie Gewindelänge und Gewindesteigung) erreichbar ist. Daher kann die Gegenspindel die vorgegebene Endwinkelstellung nie erreichen ohne daß vorher das Gegenstück 16 mit dem zweiten Teilstück 20 zur Anlage kommt. Die Stromaufnahme des Drehantriebes der Gegenspindel (C2-Achse) ist für das Drehmoment charakteristisch und steigt an, sobald das Gegenstück 16 soweit auf das erste zylindrische Teilstück 14 aufgeschraubt ist, daß das zweite Teilstück 20 zwischen dem Anschlag 18 und dem Gegenstück 16 eingespannt ist. Da zwischen der Stromaufnahme und dem Drehmoment ein direkter Zusammenhang besteht kann der Schraubvorgang in Abhängigkeit von der Stromaufnahme beendet werden, wobei dann das Gegenstück 16 mit dem ersten zylindrischen Teilstück 14 mit einem entsprechenden Drehmoment verschraubt ist.

Um sicherzustellen, daß sich das Gegenstück 16 nicht von dem ersten zylindrischen Teilstück 14 löst, kann auf die Gewindegänge ein Sichtungskleber aufgebracht werden. Falls das Gegenstück 16 soweit auf das erste Teilstück 14 aufgeschraubt wird, daß das Außengewinde 22 das Gegenstück 16 in axialer Richtung überragt, kann der überstehende Teil des Außengewindes 22 durch einen Planschlichtschnitt entfernt werden.

## Patentansprüche

1. Verfahren zur vollautomatischen Herstellung eines zylindrischen Werkstückes aus wenigstens zwei Materialien in einem Dreh-/Fräszentrum und zugeordnetem Handhabungssystem zum Zu- und Abführen von Werkstücken mit folgenden Schritten:
- Bearbeiten eines ersten, in einer ersten Spindel des Dreh-/Fräszentrum eingespannten zylindrischen Teilstückes (14) aus einem ersten Material (A), so daß das erste Teilstück (14) zumindest einen Anschlag (18) für ein zweites Teilstück (20) aufweist,
- Ausformen eines ersten Teils (22) einer Fügeverbindung an dem ersten Teilstück (14) im Abstand zu dem Anschlag (18),
- Ausformen eines zweiten Teils (24) der Fügeverbindung an einem in einer der ersten Spindel zugewandten zweiten Spindel des Dreh-/Fräszentrums eingespannten Gegenstück (16),
- wobei die erste und die zweite Spindel beim und nach dem Herstellen der beiden Teile der Fügeverbindung winkelsynchron angetrieben werden,
- Bearbeiten eines zweiten Teilstückes (20) aus einem zweiten Material (B), so daß das zweite Teilstück (20) so dimensioniert ist, daß es auf das erste, in der ersten Spindel des Dreh-/Fräszentrums eingespannte zylindrische Teilstück (14) aufbringbar ist,
- Aufbringen des zweiten Teilstückes (20) auf das erste, in der ersten Spindel des Dreh-/Fräszentrums eingespannte Teilstück (14), so daß das zweite Teilstück (20) an dem Anschlag (18) zur Anlage bringbar ist und dabei den ersten Teil (22) der Fügeverbindung an dem ersten Teilstück (14) allenfalls teilweise überdeckt,
- Fügen des in der zweiten Spindel des Dreh-/Fräszentrums eingespannten Gegenstücks (16) an das erste, in der ersten Spindel des Dreh/Fräszentrums eingespannten Teilstück (14), wobei
- das zweite Teilstück (20) durch das Gegenstück (16) gegen des Anschlag (18) gepreßt wird,
- eine für den Fügevorgang charakteristische Kenngröße erfaßt und mit einem vorherbestimmbaren Vergleichswert verglichen wird, und
- bei Erreichen des Vergleichswertes der Fügevorgang beendet wird,
- Abstechen des aus erstem Teilstück (14), zweitem Teilstück (20) und Gegenstück (16) zusammengefügten zylindrischen Werkstückes und Entnahme aus dem Dreh-/Fräszentrum.

2. Verfahren nach Anspruch 1, dadurch gekennzeichnet, daß
- der erste Teil (22) der Fügeverbindung an dem ersten Teilstück (14) und der zweite Teil (24) der Fügeverbindung an einem Gegenstück (16) ein Außengewinde bzw. ein Innengewinde ist.

3. Verfahren nach Anspruch 2, dadurch gekennzeichnet, daß
- das Außengewinde bzw. das Innengewinde so gefertigt werden, daß die Gewindeanfänge des Außengewindes bzw. des Innengewindes eine definierte Winkelstellung zueinander haben.

4. Verfahren nach einem der Ansprüche 1 bis 4, dadurch gekennzeichnet, daß
- das zweite Teilstück (20) durch ein Handhabungssystem, vorzugsweise mit Teilespeicherung, auf das erste Teilstück (14) aufgebracht wird.

5. Verfahren nach Anspruch 4, dadurch gekennzeichnet, daß
- in einem NC-Programm für die Dreh-/Fräsmaschine für den Fügevorgang
- ein Drehwinkel für das Gegenstück (16) relativ zu dem ersten Teilstück (14) vorgegeben wird, der größer ist, als der tatsächlich ausgeführte Drehwinkel,
- die Stromaufnahme eines Drehantriebes gemessen wird, durch den die Drehung des Gegenstückes (16) relativ zu dem ersten Teilstück (14) ausgeführt wird, und
- bei Erreichen eines vorherbestimmten Stromwertes die Drehbewegung beendet wird.

## Claims

1. A method for the fully automated fabrication of a cylindrical workpiece of at least two materials in a turning and milling centre and an associated handling system for feeding and discharging workpieces, comprising the following steps:
- machining a first cylindrical section (14) of a first material (A) which is clamped in a first spindle of the turning and milling centre, so that the first section (14) is at least provided with an abutment (18) for a second section (20),
- forming a first part (22) of a joining connection on the first section (14), spaced from the abutment (18),
- forming a second part (24) of the joining connection on a counterpiece (16) clamped in a second spindle facing the first spindle of the turning and milling centre,
- with the first and second spindles being driven angle-synchronously during and after the manufacture of the two parts of the joining connection,
- machining a second section (20) of a second material (B) such that the second section (20) is so dimensioned that it can be placed on the first cylindrical section (14) which is clamped in the first spindle of the turning and milling centre,
- applying the second section (20) on the first section (14) clamped in the first spindle of the turning and milling centre such that the second section (20) can be brought to abut the abutment (18) and thereby to cover, partially at most, the first part (22) of the joining connection on the first section (14),
- - joining the counterpiece (16) clamped in the second spindle of the turning and milling centre with the first section (14) clamped in the first spindle of the turning and milling centre, wherein
- - the second section (20) is pressed against the abutment (18) by the counterpiece (16),
- - a parameter characteristic for the joining process is acquired and compared to a presettable comparison value, and
- - the joining process is terminated as the comparison value is reached,
- - cutting off the cylindrical workpiece composed of the first section (14), the second section (20) and the counterpiece (16) and removing it from the turning and milling centre.

2. The method according to claim 1, characterised in that
- the first part (22) of the joining connection on the first section (14) and the second part (24) of the joining connection on a counterpiece (16) are an external thread and an internal thread, respectively.

3. The method according to claim 2, characterised in that
- the external thread and the internal thread, respectively, are made in such a manner that the beginnings of the external and internal threads, respectively, have a defined angular position with respect to each other.

4. The method according to one of claims 1 to 4, characterised in that
- the second section (20) is applied to the first section (14) by a handling system, preferably having a part storage means.

5. The method according to claim 4, characterised in that
- in an NC programme for the turning and milling machine for the joining process
- - an angle of rotation for the counterpiece (16) is preset relative to the first section (14) which is larger than the angle of rotation actually performed,
- - the current consumption of a drive performing the rotation of the counterpiece (16) relative to the first section (14) is measured, and
- - the rotary movement is terminated as soon as a predetermined current value is reached.

## Revendications

1. Procédé pour la fabrication totalement automatisée d'une pièce cylindrique en au moins deux matériaux dans une machine à tourner et à fraiser et un système de manipulation associé pour amener et enlever des pièces à usiner comprenant les opérations suivantes :
- usiner une première pièce partielle (14) cylindrique en un premier matériau (A), serrée dans une première broche de la machine à tourner et à fraiser, de telle façon que la première pièce cylindrique (14) présente au moins une butée (18) pour une deuxième pièce partielle (20),
- former une première partie (22) d'une liaison par raccordement sur la première pièce partielle (14) à distance de la butée (18),
- former une deuxième partie (24) de la liaison par raccordement sur une pièce antagoniste (16) serrée dans une deuxième broche de la machine à tourner et à fraiser faisant face à la première broche,
- la première et la deuxième broches étant entraînées pendant et après la fabrication des deux parties de la liaison par raccordement pour tourner de façon identique,
- usiner une deuxième pièce partielle (20) en un deuxième matériau (B) en conférant à la deuxième pièce partielle (20) des dimensions telles qu'elle puisse être disposée sur la première pièce partielle (14) cylindrique serrée dans la première broche de la machine à tourner et à fraiser,
- disposer la deuxième pièce partielle (20) sur la première pièce partielle (14) serrée dans la première broche de la machine à tourner et à fraiser, de telle façon que la deuxième pièce partielle (20) puisse être amenée en contact avec la butée (18) et qu'elle recouvre à cette occasion au besoin partiellement la première partie (22) de la liaison par raccordement de la première pièce partielle (14).
- raccorder la pièce antagoniste (16) serrée dans la deuxième broche de la machine à tourner et à fraiser à la première pièce partielle (14) serrée dans la première broche de la machine à tourner et à fraiser,
- en pressant la deuxième pièce partielle (20) par l'intermédiaire de la pièce antagoniste (16) contre la butée (18),
- en relevant une grandeur caractéristique du processus de raccordement et en la comparant à une valeur de référence pouvant être déterminée à l'avance, et
- en terminant le processus de raccordement lorsque la valeur de référence est atteinte,
- tronçonner la pièce usinée cylindrique formée de l'assemblage de la première pièce partielle (14), de la deuxième pièce partielle (20) et de la pièce antagoniste (16) et la retirer de la machine à tourner et à fraiser.

2. Procédé selon la revendication 1, caractérisé en ce que
- la première partie (22) de la liaison par raccordement sur la première pièce partielle (14) et la deuxième partie (24) de la liaison par raccordement sur une pièce antagoniste (16) est un filetage, respectivement un taraudage.

3. Procédé selon la revendication 2, caractérisé en ce que
- le filetage, respectivement le taraudage sont réalisés de telle façon que les débuts des filets du filetage, respectivement du taraudage présentent une position angulaire relative définie.

4. Procédé selon l'une quelconque des revendications 1 à 3, caractérisé en ce que
- la deuxième pièce partielle (20) est disposée sur la première pièce partielle (14) par un système de manipulation comprenant de préférence une réserve de pièces.

5. Procédé selon la revendication 4, caractérisé en ce que
- dans un programme de commande numérique de la machine à tourner et à fraiser pour le processus de raccordement
- un angle de rotation de la pièce antagoniste (16) par rapport à la première pièce partielle (14) est donné à l'avance qui est plus grand que l'angle de rotation effectivement exécuté,
- la consommation de courant d'un système d'entraînement en rotation qui effectue la rotation de la pièce antagoniste (16) par rapport à la première pièce partielle (14), est mesurée, et
- lorsqu'une valeur prédéterminée de la consommation de courant est atteinte, le mouvement de rotation est terminé.
